# EUROPÄISCHE PATENTSCHRIFT

(11) **EP 3 385 608 B1**
(45) Veröffentlichungstag und Bekanntmachung des Hinweises auf die Patenterteilung: **08.06.2022**
(21) Anmeldenummer: 18159375.7
(22) Anmeldetag: 01.03.2018
(51) Int. Cl.: F21S 41/33

(54) **BELEUCHTUNGSVORRICHTUNG FÜR FAHRZEUGE**
ILLUMINATION DEVICE FOR VEHICLES
DISPOSITIF D'ECLAIRAGE POUR VÉHICULES

(30) Priorität: 16.03.2017 DE 102017105633
(43) Veröffentlichungstag der Anmeldung: 10.10.2018
(73) Patentinhaber: HELLA GmbH & Co. KGaA, 59557 Lippstadt (DE)
(72) Erfinder: Pfingstl, Rainer, 7551 Stegersbach (AT); Röhrling, Mario, 7431 Bad Tatzmannsdorf (AT)
(74) Vertreter: Ostermann, Thomas

(56) Entgegenhaltungen:
- EP-A1- 3 106 347
- EP-A2- 1 077 344
- DE-A1-102009 005 635
- DE-A1-102009 035 165
- DE-A1-102011 006 699
- US-A- 1 751 934
- US-A- 3 700 883
- US-A- 4 704 661

## Beschreibung

Die Erfindung betrifft eine Beleuchtungsvorrichtung für Fahrzeuge nach dem Oberbegriff des Patentanspruchs 1.

Aus der EP 1 077 344 A2 ist eine Fahrzeugleuchte mit einer Mehrzahl von Lichtquellen und jeweils denselben zugeordneten Reflektoren bekannt. Die Reflektoren weisen jeweils eine vorgegebene Grundform auf, wobei die Grundform durch eine Mehrzahl von nebeneinander angeordneten Facetten gebildet ist. Die Grundform der Reflektorfläche ist parabelförmig. Durch die Vielzahl von Lichtquellen und denselben zugeordneten Reflektoren kann eine platzsparende Fahrzeugleuchte zur Erzeugung einer vorgegebenen Lichtverteilung geschaffen werden. Nachteilig an der bekannten Fahrzeugleuchte ist, dass der Aufbau relativ aufwendig ist. Insbesondere müssen mehrere Lichtquellen in unterschiedlichen Ebenen angeordnet werden.

Aus der DE 10 2009 035 165 A1 ist eine Beleuchtungsvorrichtung für Fahrzeuge bekannt, die eine Lichtquelle und einen Reflektor umfasst. Der Reflektor weist lichtreflektierende Facetten auf. In dem Reflektor sind Rückstrahlelemente integriert, die eine konvexe Krümmung aufweisen. Hierdurch werden Lichtstrahlen, die von anderen Verkehrsteilnehmern, beispielsweise anderen Scheinwerfern, von außen eintreffen, wieder in die Richtung zurück reflektiert.

Aus der US 1 751 934 A ist eine Beleuchtungsvorrichtung für Fahrzeuge bekannt, die eine Lichtquelle und einen Reflektor umfasst. Der Reflektor weist hochreflektive Facetten sowie geringe reflektierende Abschnitte auf, so dass ein relativ breites Lichtbündel abgestrahlt werden kann. Der Reflektor weist eine konkave Grundform auf, wobei sich die Facetten des Reflektors segmentiert nebeneinander erstrecken. Die facettenartigen Segmente weisen somit die gleiche Grundform auf.

Aus der DE 10 2009 005 635 A1 ist eine Beleuchtungsvorrichtung für Fahrzeuge bekannt, die eine Lichtquelle und einen Reflektor aufweist. Der Reflektor weist paarweise, auf gegenüberliegenden Seiten der Lichtquelle angeordnete erste Reflektorsegmente und zweite Reflektorsegmente auf. Die zweiten Reflektorsegmente weisen in einem achsnahen Bereich eine andere Grundform auf als in einem achsfernen Bereich.

Aufgabe der vorliegenden Erfindung ist daher, eine Beleuchtungsvorrichtung mit einer Lichtquelle und einem Reflektor derart weiterzubilden, dass platzsparend und kostengünstig eine vorgegebene homogene Lichtverteilung erzeugt werden kann.

Zur Lösung dieser Aufgabe weist die Erfindung die Merkmale des Patentanspruchs 1 auf.

Nach der Erfindung weist ein Reflektor mehrere Reflektorsegmente auf, die eine unterschiedliche Grundform aufweisen und hierdurch zur Erzeugung unterschiedlicher Teillichtverteilungen vorgesehen sind. Ein erstes Reflektorsegment dient zur Erzeugung einer ersten Teillichtverteilung (Nahfeldausleuchtung). Ein zweites Reflektorsegment dient zur Erzeugung einer zweiten Teillichtverteilung (Fernlichtausleuchtung). Durch Überlagerung dieser Teillichtverteilungen wird eine vorgegebene Lichtverteilung bereitgestellt, wobei vorzugsweise eine Arbeitslichtverteilung erzeugt wird, wenn es sich um landwirtschaftliche Fahrzeuge bzw. Landmaschinen handelt. Die Reflektorsegmente sind derselben Lichtquelle zugeordnet, so dass die resultierende Lichtverteilung mit einem Minimum von Lichtquellen erzeugt werden kann. Eine Bauraumersparnis ergibt sich dadurch, dass die für unterschiedliche Teillichtverteilungen verantwortlichen Reflektorsegmente in einem einzigen Reflektor integriert sind. Nach der Erfindung ist die erste Grundform des ersten Reflektorsegmentes und die zweite Grundform des zweiten Reflektorsegmentes derart geformt ausgebildet, dass der Reflektor hierdurch zum einen die Erzeugung einer Nahfeldausleuchtung und zum anderen die Erzeugung einer Fernfeldausleuchtung ermöglicht. Insbesondere die Nahfeldausleuchtung kann erzeugt werden, ohne dass eine Abschlussscheibe Optikelemente aufweisen muss.

Nach der Erfindung ist die Anzahl der ersten Reflektorsegmente einerseits und der zweiten Reflektorsegmente andererseits gleich, wobei jeweils die ersten und zweiten Reflektorsegmente paarweise angeordnet sind. Reflektorsegmente eines Paares von ersten und zweiten Reflektorsegmenten sind gegenüberliegend bezogen zu der Lichtquelle angeordnet. Vorteilhaft weist der Reflektor hierdurch einen relativ einfachen Aufbau auf.

Nach der Erfindung verlaufen das erste und zweite Reflektorsegment in Projektion auf eine senkrecht zur Hauptabstrahlrichtung verlaufenden Ebene kreisausschnittförmig unter einem spitzen Ringwinkel. Ein Abstand zwischen Randkanten der jeweiligen Reflektorsegmente nimmt somit mit zunehmender Entfernung von der Lichtquelle zu. Vorzugsweise sind die Randkanten geradlinig ausgebildet. Der Reflektor weist somit einen einfach herzustellenden Aufbau sowie eine effektive Umlenkung des von der Lichtquelle zur Verfügung gestellten Lichtstromes zur Erzeugung der Lichtverteilung auf.

Nach einer Weiterbildung der Erfindung weist die zwischen den Reflektorsegmenten ausgebildete Randkante eine Breite auf, die sich zu einem äußeren

Rand des Reflektors hin vergrößert. Hierdurch wird sichergestellt, dass die Reflektorsegmente unterschiedlicher Grundform in einem einzigen Stück hergestellt werden können.

Die erfindungsgemäße Beleuchtungsvorrichtung wird vorzugsweise als Arbeitsscheinwerfer in landwirtschaftlichen Fahrzeugen und/oder Landmaschinen eingesetzt. Zur Erzeugung der Lichtverteilungen sind vorzugsweise mehrere Leuchtmodule nebeneinander angeordnet, wobei jedes Leuchtmodul durch eine einzige Lichtquelle und einen einzigen Reflektor gebildet ist. Die Lichtquellen der Leuchtmodule können in einer gemeinsamen Ebene auf einem einzigen Lichtquellenträger angeordnet sein. Es ergibt sich hierdurch eine platzsparende und effektive homogene Ausleuchtung durch den Arbeitsscheinwerfer.

Ein Ausführungsbeispiel der Erfindung wird nachfolgend anhand der Zeichnungen näher erläutert.

Es zeigen:
- Fig. 1: eine Vorderansicht einer Beleuchtungsvorrichtung,
- Fig. 2: einen Vertikalschnitt durch die Beleuchtungsvorrichtung,
- Fig. 3: einen Horizontalschnitt durch die Beleuchtungsvorrichtung,
- Fig. 4: eine Teillichtverteilung einer Nahausleuchtung,
- Fig. 5: eine Teillichtverteilung einer Fernausleuchtung und
- Fig. 6: eine Darstellung einer resultierenden Lichtverteilung.

Eine Beleuchtungsvorrichtung nach der Erfindung wird vorzugsweise als Arbeitsscheinwerfer in landwirtschaftlichen Fahrzeugen und/oder Landmaschinen eingesetzt. Alternativ kann die Beleuchtungsvorrichtung auch der Allgemeinbeleuchtung (Gebäude, öffentlicher Raum etc.) oder in oder an jeglichen Fahrzeugen eingesetzt werden. Beispielsweise kann die Beleuchtungsvorrichtung auch zur Erzeugung von zwei unterschiedlichen Lichtfunktionen, beispielsweise Abblendlicht- und Fernlicht eingesetzt werden.

Die Beleuchtungsvorrichtung weist ein Gehäuse 1 auf, in dem mehrere Leuchtmodule 2 angeordnet sind. Ein Öffnungsrand 3 des Gehäuses 1 ist über Dichtungs- und/oder Klebemittel 4 mit einer transparenten Abschlussscheibe 5 verbunden. Das Dichtungs- und/oder Klebemittel 4 kann als Silikonklebemittel ausgebildet sein. Die Abschlussscheibe 5 ist aus einem glasklaren Kunststoffmaterial oder einem glasklaren Glasmaterial hergestellt.

Die Leuchtmodule 2 weisen jeweils eine Lichtquelle 6 auf, der ein einziger Reflektor 7 zugeordnet ist. Die Lichtquelle 6 ist vorzugsweise als halbleiterbasierte Lichtquelle, LED-Lichtquelle, ausgebildet. Eine Hauptachse 8 der Lichtquelle 6 verläuft parallel zu einer Hauptabstrahlrichtung H der Beleuchtungsvorrichtung. Die Lichtquelle 6 ist in einer hinteren Öffnung 9 des Reflektors 7 angeordnet. Die Lichtquelle 6 ist somit in einem Fußbereich des Reflektors 7 angeordnet, der sich in Hauptabstrahlrichtung H unter Bildung mehreren Reflektorsegmenten 10, 11 öffnet bis zu einem vorderen Rand 12 des Reflektors 7. Im vorliegenden Ausführungsbeispiel weist der Reflektor 7 ein Paar von ersten Reflektorsegmenten 10 zur Erzeugung einer ersten Teillichtverteilung T1 und ein Paar von zweiten Reflektorsegmenten 11 zur Erzeugung einer zweiten Teillichtverteilung T2. Das erste Reflektorsegment 10 weist eine erste Grundform auf, die sich von einer zweiten Grundform des zweiten Reflektorsegmentes 11 unterscheidet. Die Grundform des ersten Reflektorsegmentes 10 ist parabelförmig ausgebildet, so dass die erste Teillichtverteilung T1 zur Nahfeldausleuchtung dient. Die Grundform des zweiten Reflektorsegmentes 11 ist freiformflächig ausgebildet, so dass die zweite Teillichtverteilung T2 zur Fernfeldausleuchtung dient. Alternativ kann die Grundform des ersten Reflektorsegmentes 10 und/oder die Grundform des zweiten Reflektorsegmentes 11 auch eine andere Grundform aufweisen, beispielsweise kann die Grundform des ersten Reflektorsegmentes 10 freiformflächig und die Grundform des zweiten Reflektorsegmentes 11 parabelförmig sein. Die LED-Lichtquellen 6 sind jeweils auf einem gemeinsamen Lichtquellenträger 26 (Leiterplatte) angeordnet.

Das Paar von ersten Reflektorsegmenten 10 und das Paar von zweiten Reflektorsegmenten 11 bilden zusammen eine einstückig miteinander verbundene Reflektorfläche des Reflektors 7.

Das erste Reflektorsegment 10 weist eine Vielzahl von nebeneinander angeordneten Facetten 13 auf, die in ihrer Dimension kleiner ausgebildet sind als eine Vielzahl von nebeneinander angeordneten Facetten 14 des zweiten Reflektorsegmentes 11.

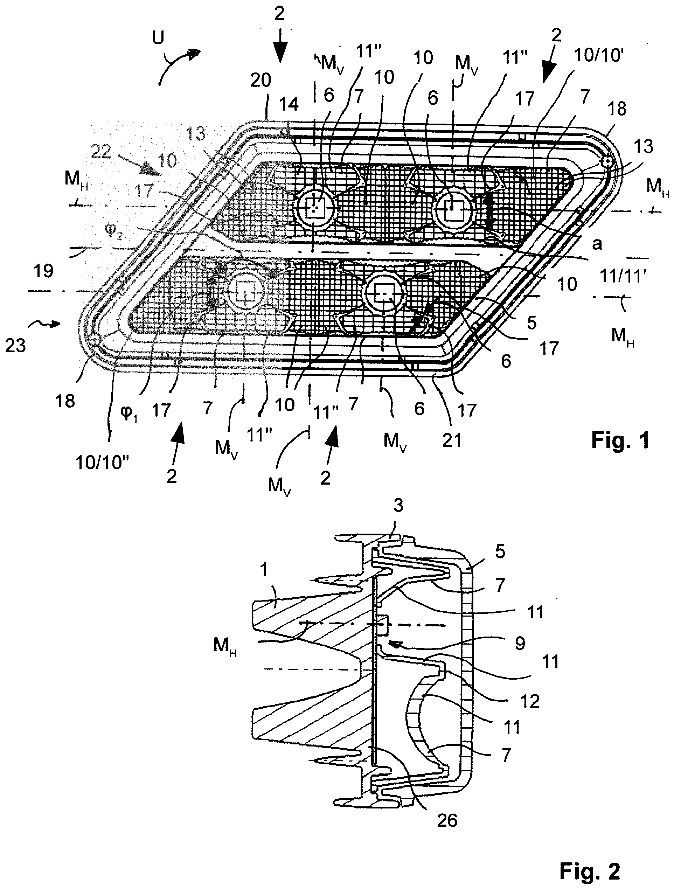

Wie aus Figur 1 ersichtlich ist, sind die ersten Reflektorsegmente 10 des Paares von ersten Reflektorsegmenten 10 einerseits und die zweiten Reflektorsegmente 11 des Paares von zweiten Reflektorsegmenten 11 andererseits auf gegenüberliegenden Seiten der Lichtquelle 6 angeordnet. Die Anzahl der Paare von ersten Reflektorsegmenten 10 und zweiten Reflektorsegmenten 11 ist gleich. Im vorliegenden Ausführungsbeispiel weisen die Leuchtmodule 2 jeweils ein einziges Paar von ersten Reflektorsegmenten 10 und ein einziges Paar von zweiten Reflektorsegmenten 11 auf. Gegebenenfalls könnten auch zwei Paare von ersten Reflektorsegmenten 10 und zwei Paare von zweiten Reflektorsegmenten 11 vorgesehen sein.

Die ersten Reflektorsegmente 10 und die zweiten Reflektorsegmente 11 erstrecken sich jeweils bogenförmig, und zwar entsprechend der jeweiligen Grundform, von der Ebene, in der die Lichtquellen 6 angeordnet sind, in Richtung der Abschlussscheibe 5. Das erste Reflektorsegment 10 und das zweite Reflektorsegment 11 verlaufen in Projektion auf eine senkrecht zur Hauptabstrahlrichtung H verlaufenden Ebene, die vorzugsweise parallel zu dem Lichtquellenträger 26 bzw. einer Erstreckungsebene der Lichtquellen 6 verläuft, jeweils kreisausschnittförmig unter einem spitzen Ringwinkel *ϕ*₁ bzw. *ϕ*₂, wobei die Ringwinkel *ϕ*_{1,} *ϕ*₂ in Umfangsrichtung U des Reflektors 7 verlaufen. Im vorliegenden Ausführungsbeispiel ist der Ringwinkel *ϕ*₁ des ersten Reflektorsegmentes 10 kleiner als der Ringwinkel *ϕ*₂ des zweiten Reflektorsegmentes 11. Der Ringwinkel *ϕ₁* des ersten Reflektorsegmentes 10 liegt im Bereich von 60°, während der Ringwinkel *ϕ*₂ des zweiten Reflektorsegmentes im Bereich von 70° liegt.

Das Paar von ersten Reflektorsegmenten 10 ist symmetrisch zu einer vertikalen Mittelebene M_{V} des Reflektors 7 angeordnet. Das Paar von zweiten Reflektorsegmenten 11 ist symmetrisch zu einer horizontalen Mittelebene M_{H} des Reflektors 7 angeordnet. In Umfangsrichtung U des Reflektors 7 sind die ersten Reflektorsegmente 10 und die zweiten Reflektorsegmente 11 somit abwechselnd bzw. alternierend angeordnet.

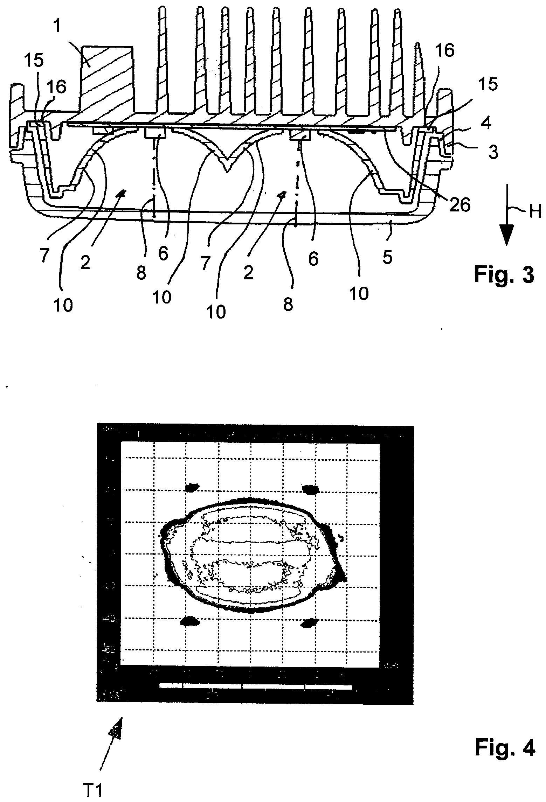

Wie aus den Figuren 2 und 3 zu ersehen ist, sind die Reflektoren 7 der Leuchtmodule 2 einstückig miteinander verbunden. Zur Montage der Beleuchtungsvorrichtung braucht aus den mehreren Reflektoren 7 gebildeter Gesamtreflektor lediglich mit seinen Seitenfüßen 15 auf Anlageflächen 16 des Gehäuses 1 positioniert und/oder befestigt werden.

Die ersten Reflektorsegmente 10 und die zweiten Reflektorsegmente 11 werden jeweils durch Randkanten 17 begrenzt, die in Projektion auf eine senkrecht zur Hauptabstrahlrichtung H verlaufenden Ebene geradlinig nach außen laufen. Die Randkante 17 bildet einen Verbindungsabschnitt zwischen benachbarten Reflektorsegmenten 10, 11. Im vorliegenden Ausführungsbeispiel ist eine Breite b dieser Randkante 17 in Richtung zu dem vorderen Rand 12 des Reflektors 7 vergrößert ausgebildet. Gegebenenfalls kann die Breite b der Randkante 17 bzw. des Verbindungsbereichs auch in Richtung zu dem vorderen Rand 12 des Reflektors 7 konstant ausgebildet sein.

Dadurch, dass alle gedachten Verlängerungen der Randkante 17 eine optische Achse der dem Reflektor 7 zugeordnete Lichtquelle 6 schneiden, vergrößert sich ein Abstand a von den jeweiligen Reflektorsegmente 10, 11 begrenzenden Randkanten 17 zueinander von einem der Lichtquelle 6 zugewandten Ende hin zu dem vorderen Rand 12 des Reflektors 7. Der Reflektor 7 umgibt die Lichtquelle 6 in Umfangsrichtung U durchgehend.

Aufgrund der parallelogrammartigen Kontur der Abschlussscheibe 5 bzw. des Öffnungsrandes 3 des Gehäuses 1 sind zumindest die Reflektorflächen der ersten Reflektorsegmente 10 nicht gleich groß ausgebildet. Denn Eckbereiche 18 des Gehäuses 1 bzw. der Abschlussscheibe 5 werden von den Reflektorsegmenten 10, 11 voll ausgenutzt zur Reflexion des Lichtes. Beispielsweise ist die Fläche des ersten Reflektorsegmentes 10' größer als die Fläche des gegenüberliegenden ersten Reflektorsegmentes 10 desselben Reflektors 7. Damit an gegenüberliegenden Seiten der Lichtquelle 6 die gleichgroße Reflektorfläche bereitgestellt wird, ist eine Reflektorfläche des in einem gegenüberliegenden Eckbereich 18 angeordneten ersten Reflektorsegmentes 10" gleichgroß zu der Reflektorfläche des ersten Reflektorsegmentes 10' ausgebildet. Auf diese Weise ist die Größe der Reflektorfläche der auf der einen Seite der Lichtquelle 6 angeordneten ersten Reflektorsegmente 10 gleichgroß zu der Reflektorfläche der auf der gegenüberliegenden Seite angeordneten ersten Reflektorsegmenten 10 der Leuchtmodule 2. Dasselbe gilt für die zweiten Reflektorsegmente 11, wenn beispielsweise der Abstand der Lichtquellen 6 zu einer horizontalen Mittelebene 19 des Gehäuses 1 kleiner ist als zu einem oberen Rand 20 des Gehäuses 1 bzw. unteren Rand 21 des Gehäuses 1. In einem solchen Fall sind untere zweite Reflektorsegmente 11' einer oberen Reihe 22 von Leuchtmodulen 2 und obere zweite Reflektorsegmente 11' einer unteren Reihe 23 von Leuchtmodulen 2 zum einen gleichgroß und zum anderen kleiner ausgebildet als obere zweite Reflektorsegmente 11" der oberen Reihe 22 der Leuchtmodule 2 und untere Reflektorsegmente 11" der unteren Reihe 23 der Leuchtmodule 2.

Auch bei asymmetrisch angeordneten Leuchtmodulen 2 ist somit sichergestellt, dass die Gesamtfläche der jeweiligen paarweise angeordneten ersten Reflektorsegmente 10 und zweiten Reflektorsegmente 11 gleich sind.

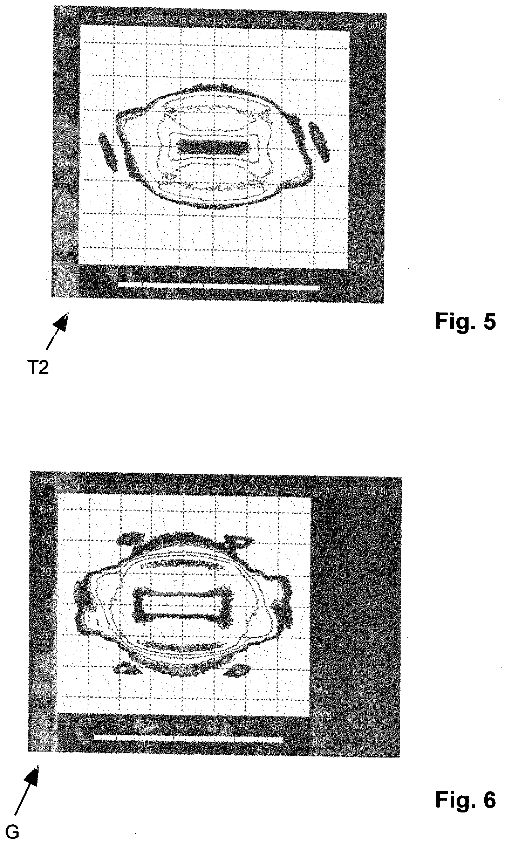

Die ersten Reflektorsegmente 10 der Leuchtmodule 2 dienen zur Erzeugung der ersten Teillichtverteilung T1 (Nahfeldausleuchtung), die in Figur 4 dargestellt ist. Die zweiten Reflektorsegmente 11 der Leuchtmodule 2 erzeugen eine zweite Teillichtverteilung T2 (Fernfeldausleuchtung) gemäß Figur 5. Durch Überlagerung dieser beiden Teillichtverteilungen T1, T2 ergibt sich die in Figur 6 dargestellte Gesamtlichtverteilung G, die die Lichtverteilung des Arbeitsscheinwerfers repräsentiert.

## Patentansprüche

1. Beleuchtungsvorrichtung für Fahrzeuge mit einem Gehäuse (1) enthaltend einen Öffnungsrand (3), der über ein Dichtungs- und/oder Klebemittel (4) mit einer transparenten Abschlussscheibe (5) verbunden ist, dass in dem Gehäuse (1) eine Anzahl von Lichtquellen (6) und Reflektoren (7) angeordnet ist, wobei jeder Lichtquelle (6) ein einziger Reflektor (7) zugeordnet ist zur Umlenkung des von der Lichtquelle (6) abgestrahlten Lichtes in eine Hauptabstrahlrichtung (H) der Beleuchtungsvorrichtung entsprechend einer vorgegebenen Lichtverteilung, wobei der Reflektor (7) eine Reflektorfläche mit einer Grundform enthaltend eine Mehrzahl von Facetten (13, 14) aufweist, wobei der Reflektor (7) ein erstes Reflektorsegment (10) enthaltend eine Reflektorfläche mit einer ersten Grundform zur Erzeugung einer ersten Teillichtverteilung (T1) einerseits und ein zweites Reflektorsegment (11) enthaltend eine Reflektorfläche mit einer zweiten unterschiedlichen Grundform zur Erzeugung einer zweiten Teillichtverteilung (T2) andererseits aufweist, wobei die erste Grundform des ersten Reflektorsegmentes (10) zur Erzeugung der als eine Nahfeldausleuchtung ausgebildeten ersten Teillichtverteilung (T1) und die zweite Grundform des zweiten Reflektorsegmentes (11) zur Erzeugung der als eine Fernfeldausleuchtung ausgebildeten zweiten Teillichtverteilung (T2) ausgebildet ist, wobei die Facetten (13) des erstes Reflektorsegmentes (10) eine kleinere Dimension aufweisen als die Facetten (14) des zweiten Reflektorsegmentes (11), wobei der Reflektor (7) mindestens zwei erste Reflektorsegmente (10) und mindestens zwei zweite Reflektorsegmente (11) aufweist, wobei die Anzahl der ersten Reflektorsegmente (10) und der zweiten Reflektorsegmente (11) gleich ist und wobei sich die ersten Reflektorsegmente (10) und die zweiten Reflektorsegmente (11) jeweils paarweise von gegenüberliegenden Seiten der Lichtquelle (6) bogenförmig in Richtung der Abschlussscheibe (5) erstrecken, wobei ein Paar von ersten Reflektorsegmenten (10) symmetrisch zu einer vertikalen Mittelebene (Mv) des Reflektors (7) und ein Paar von zweiten Reflektorsegmenten (11) symmetrisch zu einer horizontalen Mittelebene (M_{H}) des Reflektors (7) angeordnet sind, **dadurch gekennzeichnet, dass** das erste Reflektorsegment (10) und das zweite Reflektorsegment (11) in Projektion auf eine senkrecht zur Hauptabstrahlrichtung (H) verlaufenden Ebene kreisausschnittförmig unter einem spitzen Ringwinkel (ϕ1, ϕ2) verlaufen, dass der Ringwinkel (*ϕ*₁) des ersten Reflektorsegmentes (10) kleiner ist als der Ringwinkel (*ϕ*₂) des zweiten Reflektorsegmentes (11), und dass die ersten Reflektorsegmente (10) und die zweiten Reflektorsegmente (11) in Umfangsrichtung (U) des Reflektors (7) alternierend angeordnet sind.

2. Beleuchtungsvorrichtung nach dem Anspruch 1, **dadurch gekennzeichnet, dass** zwischen dem ersten Reflektorsegment (10) und dem zweiten Reflektorsegment (11) eine Randkante (17) ausgebildet ist, deren Breite (b) sich zu einem vorderen Rand (12) des Reflektors (7) vergrößert oder konstant ist.

3. Beleuchtungsvorrichtung nach einem der Ansprüche 1 bis 2, **dadurch gekennzeichnet, dass** die Abschlussscheibe (5) glasklar und frei von Optikelementen ausgebildet ist.

4. Verwendung der Beleuchtungsvorrichtung nach einem der Ansprüche 1 bis 3 als ein Arbeitsscheinwerfer für landwirtschaftliche Fahrzeuge und/oder Landmaschinen, wobei zur Erzeugung der Lichtverteilung (G) eine Anzahl von nebeneinander angeordneten Leuchtmodulen (2) enthaltend jeweils eine einzige Lichtquelle (6) und einen einzigen Reflektor (7) vorgesehen ist.

## Claims

1. An illumination device for vehicles having a housing (1) including an opening edge (3) which is connected to a transparent closing disc (5) via a sealant and/or adhesive (4),
wherein a number of light sources (6) and reflectors (7) are arranged in the housing (1),
wherein each light source (6) is associated with a single reflector (7) for deflecting the light radiated from the light source (6) in a main radiation direction (H) of the illumination device corresponding to a predetermined light distribution, wherein the reflector (7) has a reflector surface with a basic shape including a plurality of facets (13, 14),
wherein the reflector (7) has a first reflector segment (10) including a reflector surface with a first basic shape for generating a first partial light distribution (T1) on the one hand and a second reflector segment (11) including a reflector surface with a second, different basic shape for generating a second partial light distribution (T2) on the other hand,
wherein the first basic shape of the first reflector segment (10) is formed for generating the first partial light distribution (T1) designed as near field illumination and the second basic shape of the second reflector segment (11) is formed for generating the second partial light distribution (T2) designed as far field illumination,
wherein the facets (13) of the first reflector segment (10) have a smaller dimension than the facets (14) of the second reflector segment (11),
wherein the reflector (7) has at least two first reflector segments (10) and at least two second reflector segments (11), wherein the number of first reflector segments (10) and of second reflector segments (11) is the same and wherein the first reflector segments (10) and the second reflector segments (11) each extend in pairs in an arch shape from opposing sides of the light source (6) toward the closing disc (5),
wherein a pair of first reflector segments (10) is arranged symmetrically to a vertical center plane (Mv) of the reflector (7) and a pair of second reflector segments (11) is arranged symmetrically to a horizontal center plane (M_{H}) of the reflector (7),
**characterized in that** the first reflector segment (10) and the second reflector segment (11) run semi-circularly under an acute ring angle (ϕ1, ϕ2) when projected onto a plane which is perpendicular to the main radiation direction (H), **in that** the ring angle (ϕ₁) of the first reflector segment (10) is smaller than the ring angle (ϕ₂) of the second reflector segment (11), and **in that** the first reflector segments (10) and the second reflector segments (11) are alternatingly arranged in the circumferential direction (U) of the reflector (7).

2. The illumination device according to Claim 1, **characterized in that** a rim (17) is formed between the first reflector segment (10) and the second reflector segment (11), the width (b) of said rim being enlarged or constant towards a front edge (12) of the reflector (7).

3. The illumination device according to any one of Claims 1 to 2, **characterized in that** the closing disc (5) is crystal clear and formed to be free of optical elements.

4. Use of the illumination device according to any one of Claims 1 to 3 as a working spotlight for agricultural vehicles and/or agricultural machines, wherein, for generating the light distribution (G), a number of light modules (2) arranged next to each other and each containing a single light source (6) and a single reflector (7) are provided.

## Revendications

1. Dispositif d'éclairage pour véhicules doté d'un boîtier (1) comprenant un bord d'ouverture (3), qui est relié à une vitre de fermeture (5) transparente par le biais d'un moyen étanchéifiant et/ou adhésif (4),
un certain nombre de sources de lumière (6) et de réflecteurs (7) étant disposé dans le boîtier (1),
un réflecteur (7) unique étant associé à chaque source de lumière (6) pour dévier la lumière émise par la source de lumière (6) dans une direction de faisceau principale (H) du dispositif d'éclairage conformément à une répartition prédéfinie de la lumière, le réflecteur (7) comportant une surface de réflecteur avec une forme de base comprenant une pluralité de facettes (13, 14),
le réflecteur (7) comportant un premier segment de réflecteur (10) comprenant une surface de réflecteur avec une première forme de base pour générer une première répartition de lumière partielle (T1) d'une part et un second segment de réflecteur (11) comprenant une surface de réflecteur avec une seconde forme de base différente pour générer une seconde répartition de lumière partielle (T2) d'autre part,
la première forme de base du premier segment de réflecteur (10) étant conçue pour générer la première répartition de lumière partielle (T1) réalisée sous la forme d'un éclairage de champ proche et la seconde forme de base du second segment de réflecteur (11) étant conçue pour générer la seconde répartition de lumière partielle (T2) réalisée sous la forme d'un éclairage de champ lointain,
les facettes (13) du premier segment de réflecteur (10) présentant une dimension plus petite que les facettes (14) du second segment de réflecteur (11),
le réflecteur (7) comportant au moins deux premiers segments de réflecteur (10) et au moins deux seconds segments de réflecteur (11), le nombre des premiers segments de réflecteur (10) et des seconds segments de réflecteur (11) étant identique et les premiers segments de réflecteur (10) et les seconds segments de réflecteur (11) s'étendant respectivement par paires depuis des côtés opposés de la source de lumière (6) en forme d'arc en direction de la vitre de fermeture (5),
une paire de premiers segments de réflecteur (10) étant disposée de manière symétrique par rapport à un plan médian vertical (M_{V}) du réflecteur (7) et une paire de seconds segments de réflecteur (11) étant disposée de manière symétrique par rapport à un pian médian horizontal (M_{H}) du réflecteur (7), **caractérisé en ce que** le premier segment de réflecteur (10) et le second segment de réflecteur (11) s'étendent, en projection sur un plan perpendiculaire à la direction de faisceau principal (H), en forme de secteur circulaire en formant un angle annulaire aigu (ϕ1, ϕ2), **en ce que** l'angle annulaire (ϕ₁) du premier segment de réflecteur (10) est inférieur à l'angle annulaire (ϕ₂) du second segment de réflecteur (11) et **en ce que** les premiers segments de réflecteur (10) et les seconds segments de réflecteur (11) sont disposés en alternance dans le sens circonférentiel (U) du réflecteur (7).

2. Dispositif d'éclairage selon la revendication 1, **caractérisé en ce qu'**une arête de bord (17) est réalisée entre le premier segment de réflecteur (10) et le second segment de réflecteur (11), dont la largeur (b) augmente ou est constante en direction d'un bord avant (12) du réflecteur (7).

3. Dispositif d'éclairage selon l'une quelconque des revendications 1 à 2, **caractérisé en ce que** la vitre de fermeture (5) est transparente et exempte d'éléments optiques.

4. Utilisation du dispositif d'éclairage selon l'une quelconque des revendications 1 à 3 comme projecteur de travail pour véhicules agricoles et/ou machines agricoles, dans laquelle, pour générer la répartition de la lumière (G), un certain nombre de modules d'éclairage (2) disposés les uns à côté des autres, comprenant respectivement une source de lumière (6) unique et un réflecteur (7) unique, est prévu.
